# FASCICULE DE BREVET EUROPEEN

(11) **EP 3 927 671 B1**
(45) Date de publication et mention de la délivrance du brevet: **10.04.2024**
(21) Numéro de dépôt: 20704914.9
(22) Date de dépôt: 20.02.2020
(51) Int. Cl.: C03C 17/23, B32B 17/10, C03C 17/34, C03C 17/36

(54) **FEUILLE DE VERRE REVETUE D'UNE COUCHE DE PEINTURE MINERALE ET D'UN EMPILEMENT DE COUCHES MINCES**
GLASSCHEIBE BESCHICHTET MIT EINER SCHICHT AUS MINERALISCHEM LACK UND EINEM STAPEL VON DÜNNEN SCHICHTEN
GLASS SHEET COATED WITH A LAYER OF MINERAL PAINT AND A STACK OF THIN FILMS

(30) Priorité: 22.02.2019 FR 1901815
(43) Date de publication de la demande: 29.12.2021
(73) Titulaire: Saint-Gobain Glass France, 92400 Courbevoie (FR)
(72) Inventeur: JAMART, Juliette, 60200 COMPIEGNE (FR)
(74) Mandataire: Saint-Gobain Recherche
(86) Numéro de dépôt international: PCT/EP2020/054477
(87) Numéro de publication internationale: WO 2020/169732

(56) Documents cités:
- WO-A1-2014/164240
- WO-A1-2017/203123
- FR-A1- 3 051 716

## Description

L'invention se rapporte au domaine des vitrages, en particulier des vitrages pour automobile, tels que des vitrages pour pare-brise ou pour toit de véhicule automobile.

De tels vitrages sont souvent des vitrages feuilletés, dans lesquels deux feuilles de verre sont liées adhésivement au moyen d'un intercalaire de feuilletage. Ce dernier permet en particulier de retenir les éclats de verre en cas de casse, mais apporte aussi d'autres fonctionnalités, en particulier en termes de résistance à l'effraction ou d'amélioration des propriétés acoustiques.

Ces vitrages comprennent souvent des revêtements de divers types, destinés à conférer différentes propriétés.

Le document WO2014/164240 décrit des vitrages dans lesquels une feuille de verre comprend une couche de peinture minérale.

Des couches d'émail, généralement noir et opaque, sont souvent déposées sur une partie du vitrage, généralement sous forme d'une bande périphérique destinée à dissimuler et protéger contre le rayonnement ultraviolet les joints polymériques servant à la fixation et au positionnement du vitrage sur la baie de carrosserie. Dans un vitrage feuilleté, ces couches d'émail sont généralement disposées en face 2, les faces étant traditionnellement numérotées à partir de la face destinée à être positionnée à l'extérieur du véhicule. La face 2 est donc une face en contact avec l'intercalaire de feuilletage. L'aspect esthétique de la couche d'émail vue depuis l'extérieur du véhicule revêt une importance particulière pour les constructeurs automobiles. L'émail est généralement obtenu par cuisson au-dessus de 500°C d'une composition comprenant une fritte de verre et des pigments. L'étape de cuisson est généralement réalisée simultanément avec le bombage de la feuille de verre.

Des revêtements, généralement sous forme d'empilements de couches minces, peuvent aussi être présents sur une des feuilles de verre du vitrage feuilleté. Il peut notamment s'agir de couches électroconductrices, lesquelles peuvent apporter deux types de fonctionnalités. Les couches électroconductrices peuvent d'une part, lorsque des amenées de courant sont prévues, dissiper de la chaleur par effet Joule. Il s'agit alors de couches chauffantes, utiles par exemple pour le dégivrage ou le désembuage. Ces couches présentent d'autre part, de par leur réflexion du rayonnement infrarouge, des propriétés de contrôle solaire ou de faible émissivité. Les couches sont alors appréciées pour l'amélioration du confort thermique ou pour les économies d'énergie qu'elles apportent, en diminuant la consommation destinée au chauffage ou à la climatisation. Ces empilements de couches sont généralement disposés en face 3 du vitrage feuilleté, donc également en contact avec l'intercalaire de feuilletage.

Il peut être intéressant dans certains cas de disposer la couche d'émail et l'empilement de couches minces sur la même feuille de verre, et donc sur la même face de la feuille de verre en question pour que ces revêtements soient protégés à l'intérieur du vitrage feuilleté. L'émail peut être déposé sur l'empilement de couches minces, mais les éventuelles interactions pouvant se produire entre les deux revêtements lors de la cuisson de l'émail peuvent nuire à l'esthétique de l'émail. Une autre possibilité est de déposer l'empilement de couches minces sur l'émail. Il est alors nécessaire de procéder à une précuisson de l'émail et de bien contrôler sa rugosité. La refusion de l'émail durant l'étape de cuisson et les interactions qui peuvent alors se produire avec l'empilement de couches minces peuvent toutefois dégrader l'aspect esthétique de l'émail et/ou les propriétés électroconductrices de l'empilement.

L'invention a pour but d'obvier à ces inconvénients en proposant une solution qui permette d'allier une bonne esthétique et de bonnes propriétés électroconductrices.

A cet effet, l'invention a pour objet un matériau comprenant une feuille de verre dont une des faces comprend une première zone et une deuxième zone, la première zone seulement étant revêtue d'une couche de peinture minérale opaque obtenue à partir d'une composition de peinture aqueuse comprenant des pigments et une solution aqueuse de silicate alcalin, la couche de peinture minérale et la deuxième zone de la feuille de verre étant revêtues d'un empilement de couches minces comprenant au moins une couche mince électroconductrice.

L'invention a également pour objet un procédé d'obtention d'un matériau selon l'invention, comprenant les étapes suivantes :
- la fourniture d'une feuille de verre dont une des faces comprend une première zone et une deuxième zone, puis
- une étape de dépôt sur la première zone d'une composition de peinture aqueuse comprenant des pigments et une solution aqueuse de silicate alcalin, puis
- une étape de pré-cuisson à une température d'au moins 200°C, de manière à obtenir une couche de peinture minérale, puis
- une étape de dépôt, sur la couche de peinture minérale et sur la deuxième zone de la feuille de verre, d'un empilement de couches minces comprenant au moins une couche mince électroconductrice.

Un autre objet de l'invention est un vitrage feuilleté, notamment pour pare-brise ou toit de véhicule automobile, comprenant un matériau tel que décrit précédemment, lié adhésivement à une feuille de verre supplémentaire au moyen d'un intercalaire de feuilletage, de sorte que la couche de peinture minérale et l'empilement de couches minces soient tournés vers ledit intercalaire.

L'invention a encore pour objet un procédé d'obtention d'un tel vitrage feuilleté, comprenant les étapes suivantes :
- la fourniture d'un matériau obtenu selon le procédé décrit précédemment et d'une feuille de verre supplémentaire, puis
- une étape de bombage, notamment simultané, du matériau et de la feuille de verre supplémentaire, puis
- une étape de feuilletage dudit matériau avec la feuille de verre supplémentaire au moyen d'un intercalaire de feuilletage, de sorte que la couche de peinture minérale et l'empilement de couches minces soient tournés vers ledit intercalaire.

Dans la suite du texte, la couche de peinture minérale et l'empilement de couches minces sont appelés collectivement « les revêtements ».

La feuille de verre du matériau selon l'invention est de préférence en verre silico-sodo-calcique. Elle est avantageusement obtenue par flottage. D'autres compositions de verre sont toutefois possibles, par exemple des compositions du type borosilicate ou aluminosilicate.

La feuille de verre peut être en verre clair ou en verre teinté, de préférence en verre teinté, par exemple en vert, gris ou bleu. Pour ce faire, la composition chimique de la feuille de verre comprend avantageusement de l'oxyde de fer, en une teneur pondérale allant de 0,5 à 2%. Elle peut également comprendre d'autres agents colorants, tels que l'oxyde de cobalt, l'oxyde de chrome, l'oxyde de nickel, l'oxyde d'erbium, ou encore le sélénium.

La feuille de verre présente une épaisseur de préférence comprise entre 0,7 et 5 mm, notamment entre 1 et 4 mm, voire entre 1,5 et 3 mm.

Les dimensions latérales de la feuille de verre sont à adapter en fonction de celles du vitrage feuilleté auquel elle est destinée à être intégrée. La feuille de verre présente de préférence une surface d'au moins 1 m².

Les dimensions de la feuille de verre peuvent dépendre de l'étape du procédé considérée. Selon un premier mode de réalisation, les étapes de dépôt des revêtements sont réalisées sur un « primitif », c'est-à-dire une feuille de verre qui possède déjà les dimensions telles qu'elle n'aura pas à subir d'étape de découpe avant le bombage et le feuilletage. Selon un deuxième mode de réalisation, les étapes de dépôt des revêtements sont réalisées sur une feuille de verre de grande taille (par exemple d'une surface entre 6 et 20 m², notamment d'environ 3*6 m² ou 3*3 m²). On peut alors réaliser plusieurs vitrages feuilletés à partir du matériau obtenu. Dans ce cas, une étape de découpe est réalisée préalablement au bombage et au feuilletage. Après découpe, la feuille de verre d'origine est subdivisée en n feuilles de verre, n valant typiquement de 2 à 5, notamment 3 ou 4.

La feuille de verre peut être plane ou bombée. Elle est généralement plane lors des étapes de dépôt de la composition de peinture et de l'empilement de couches minces. Elle est ensuite de préférence bombée avant l'étape de feuilletage, et possède donc une forme bombée dans le vitrage final.

La première zone est celle revêtue par la couche de peinture minérale. La première zone représente de préférence entre 2 et 25%, notamment entre 3 et 20%, voire entre 5 et 15% de la surface de la face revêtue. Dans le matériau final, avant intégration ou intégré au vitrage feuilleté, la première zone se présente de préférence sous la forme d'une bande périphérique. Par « bande périphérique », on entend une bande refermée sur elle-même qui, de chaque point de la périphérie de la feuille de verre, s'étend vers l'intérieur de la feuille de verre sur une certaine largeur, typiquement comprise entre 1 et 20 cm.

Ici encore, la forme de la première zone peut dépendre de l'étape du procédé considéré, dans la mesure où des étapes de découpe peuvent intervenir après le dépôt des revêtements et avant le bombage.

Dans le premier mode de réalisation décrit ci-avant (dépôt sur primitif), la première zone, lors du dépôt des revêtements, se présente de préférence sous la forme d'une bande périphérique.

Dans le deuxième mode de réalisation décrit ci-avant (dépôt sur grande feuille), la première zone, lors du dépôt des revêtements, comprend de préférence plusieurs, notamment n bandes refermées sur elles-mêmes, disjointes, n valant typiquement de 2 à 5, notamment 3 ou 4. Après découpe, on obtient n matériaux ayant chacun une première zone se présentant sous la forme d'une bande périphérique, qui peuvent être bombés puis intégrés au vitrage feuilleté.

De préférence, la première zone et la deuxième zone représentent ensemble la totalité de la surface d'une des faces de la feuille de verre.

La couche de peinture minérale est de préférence au contact de la feuille de verre.

La couche de peinture est de préférence noire. En particulier, la clarté L* mesurée en réflexion côté verre (c'est-à-dire du côté opposé à la couche de peinture minérale) est de préférence inférieure à 5, notamment à 3. La mesure est réalisée à l'aide d'un spectrocolorimètre, et le calcul est réalisé en prenant en considération l'illuminant D65 et l'observateur de référence CIE 1964 (10°) .

L'épaisseur de la couche de peinture minérale est de préférence comprise entre 2 et 20 µm, notamment entre 3 et 15 µm, voire entre 4 et 10 µm. Il s'agit ici de l'épaisseur de la couche finale, après cuisson.

La couche de peinture minérale est obtenue à partir d'une composition de peinture aqueuse comprenant des pigments et une solution aqueuse de silicate alcalin.

Au moins un, notamment chaque, pigment est de préférence à base d'un oxyde, ou sulfure, de fer, de chrome, de cuivre, de cobalt et/ou de manganèse.

La solution aqueuse de silicate alcalin comprend de préférence, au moins un silicate de sodium, de potassium, et/ou de lithium. La solution aqueuse de silicate alcalin peut consister en un mélange de solutions aqueuses de silicates alcalins différents, par exemple un mélange d'au moins une solution aqueuse de sodium et d'au moins une solution aqueuse de potassium.

La composition de peinture comprend de préférence au moins une charge minérale, notamment choisie parmi la silice colloïdale, les feldspaths, l'alumine et les charges lamellaires. Les charges lamellaires sont de préférence choisies parmi le talc, le mica et les argiles, notamment les argiles à base de silicate ou d'aluminosilicate telles que la kaolinite, l'illinite, la montmorillonite et la sépiolite. La composition de peinture comprend avantageusement un mélange de plusieurs de ces charges minérales.

Les charges minérales et les pigments présentent de préférence une distribution granulométrique (en volume) telle que leur d90 est inférieur à 10 µm.

La composition de peinture peut également comprendre une base, notamment un hydroxyde alcalin.

La composition de peinture peut en outre contenir différents additifs, tels qu'au moins un agent dispersant, au moins un agent anti-mousse, au moins un agent épaississant, au moins un agent stabilisant et/ou au moins un agent durcisseur.

Dans la couche de peinture minérale, la teneur pondérale en silicate alcalin est de préférence comprise entre 7% et 60%, notamment entre 15 et 55%. La teneur pondérale totale en pigments et charges minérales est de préférence comprise entre 20 et 90%, notamment entre 30 et 70%. La teneur totale en additifs est de préférence comprise entre 0,1 et 5%.

Ces teneurs valent aussi pour la composition de peinture aqueuse (il s'agit alors d'un pourcentage relativement à l'extrait sec).

La couche de peinture minérale (après la pré-cuisson) comprend donc du silicate alcalin et des pigments, et le cas échéant des charges minérales.

La couche de peinture minérale est de préférence déposée par sérigraphie. L'étape de dépôt de la composition de peinture est alors réalisée par sérigraphie. La sérigraphie comprend le dépôt, notamment à l'aide d'un racle, d'une composition fluide sur la feuille de verre au travers de mailles d'un écran de sérigraphie. Les mailles de l'écran sont obturées dans la partie correspondant aux zones de la feuille de verre que l'on ne veut pas revêtir, de sorte que la composition fluide ne peut passer au travers de l'écran que dans les zones à imprimer, selon un motif prédéfini. D'autres techniques de dépôt telles que les techniques d'impression numérique sont également possibles.

L'étape de pré-cuisson peut être précédée d'une étape de séchage. Cette étape n'est toutefois pas nécessaire, car l'eau contenue dans la peinture peut s'évaporer pendant la pré-cuisson.

Après dépôt de la composition de peinture, la feuille de verre revêtue subit une étape de pré-cuisson, destinée à durcir la couche de peinture, de manière à pouvoir déposer sur elle l'empilement de couches minces. Les peintures minérales à base de silicates alcalins peuvent habituellement être durcies à des températures modérées, de l'ordre de 200 à 250°C.

Il s'est toutefois avéré que de telles températures ne permettaient pas toujours d'obtenir de bons résultats en termes d'esthétique de la couche de peinture et de propriétés électriques de l'empilement de couches minces. Il semblerait qu'en cas de durcissement à basse température, des interactions entre les deux revêtements se produisent lors du bombage. En revanche, une pré-cuisson à au moins 550°C, notamment 560°C, permet de former une couche de peinture qui ne génèrera pas d'interactions néfastes lors du bombage ultérieur. De préférence, la couche de peinture minérale opaque a donc subi une étape de pré-cuisson à une température d'au moins 550°C, notamment d'au moins 580°C et même d'au moins 600°C avant le dépôt de l'empilement de couches minces. Cette température de pré-cuisson est de préférence d'au plus 650°C. Ce mode de réalisation est particulièrement intéressant lorsqu'il est nécessaire d'atteindre de fortes conductivités électriques y compris dans la première zone, revêtue de la couche de peinture minérale.

Alternativement, lorsque les propriétés de conduction électrique sont moins cruciales, par exemple lorsque la couche mince électroconductrice est utilisée uniquement pour ses propriétés de réflexion du rayonnement infrarouge et non comme couche chauffante, la pré-cuisson peut être réalisée à des températures plus basses, notamment de 200 à 450°C, voire de 250°C à 400°C, ce qui permet notamment de faciliter la découpe ultérieure de la feuille de verre. C'est aussi le cas lorsque les considérations esthétiques sont de moindre importance, par exemple lorsqu'au moins une feuille de verre du vitrage feuilleté est très teintée, masquant une éventuellement coloration liée aux interactions entre la couche de peinture et l'empilement de couches minces.

L'étape de pré-cuisson est typiquement réalisée dans un four radiatif ou dans un four convectif. Le temps de pré-cuisson est de préférence compris entre 60 et 1000 secondes, notamment entre 100 et 600 secondes, voire entre 120 et 500 secondes.

L'empilement de couches minces est de préférence déposé, dans la première zone, au contact de la couche de peinture minérale, et dans la deuxième zone, au contact de la feuille de verre.

De préférence, l'intégralité, ou au moins 90%, de la surface de la deuxième zone est revêtue par l'empilement de couches minces. Certaines zones peuvent en effet ne pas être revêtues afin de ménager des fenêtres de communication laissant passer les ondes.

Dans l'empilement de couches minces, au moins une, notamment la ou chaque, couche mince électroconductrice est de préférence une couche métallique ou une couche d'un oxyde transparent conducteur.

La couche métallique est de préférence à base d'argent, notamment constituée d'argent. D'autres métaux tels que l'or ou le niobium sont également possibles. L'empilement peut comprendre une seule couche métallique, ou plusieurs couches métalliques identiques ou différentes, par exemple deux, trois ou quatre couches à base d'argent.

L'épaisseur physique de la couche métallique ou le cas échéant la somme des épaisseurs des couches métalliques est de préférence comprise entre 2 et 20 nm, notamment entre 3 et 15 nm.

La couche d'un oxyde transparent conducteur est de préférence à base, notamment constituée, d'un oxyde choisi parmi les oxydes mixtes d'indium et d'étain (ITO), les oxydes d'étain dopé, notamment au fluor ou à l'antimoine, les oxydes de zinc dopé, notamment à l'aluminium ou au gallium.

L'épaisseur physique de la couche d'un oxyde transparent conducteur est de préférence comprise entre 20 et 700 nm, notamment entre 30 et 500 nm.

Afin de protéger la ou chaque couche mince électroconductrice (qu'elle soit métallique ou à base d'oxyde transparent conducteur) durant l'étape de bombage, chacune de ces couches est de préférence encadrée par au moins deux couches diélectriques. Les couches diélectriques sont de préférence à base d'oxyde, de nitrure et/ou d'oxynitrure d'au moins un élément choisi parmi le silicium, l'aluminium, le titane, le zinc, le zirconium, l'étain. L'empilement de couches minces comprend par exemple une succession de couches diélectriques et de couches métalliques, notamment à base d'argent.

L'étape de dépôt de l'empilement de couches minces est de préférence réalisée par pulvérisation cathodique, notamment assistée par champ magnétique (procédé magnétron) . Dans cette technique, la feuille de verre vient défiler, dans une enceinte sous vide, en regard de différentes cibles. Sous l'effet d'un plasma, des atomes sont arrachés de la cible et se déposent sur la feuille de verre. Cette technique permet de déposer des empilements de couches particulièrement complexes, contenant une dizaine de couches minces et plus.

Les empilements précités possèdent des propriétés de conduction de l'électricité et de réflexion de l'infrarouge utiles pour procurer une fonction de chauffage (dégivrage, désembuage) et/ou une fonction d'isolation thermique.

Lorsque l'empilement de couches minces est destiné à procurer une fonction de chauffage, des amenées de courant doivent être prévues. Il peut notamment s'agir de bandes en pâte d'argent déposées par sérigraphie sur l'empilement de couches minces, au niveau de deux bords opposés de la feuille de verre.

Le vitrage feuilleté est de préférence bombé. Pour ce faire, les deux feuilles de verre du vitrage feuilleté, donc le matériau selon l'invention et la feuille de verre supplémentaire, sont bombées, généralement ensemble.

Le bombage peut notamment être réalisé par exemple par gravité (le verre se déformant sous son propre poids) ou par pressage, à des températures allant typiquement de 550 à 650°C. Pour éviter que les feuilles de verre ne collent l'une à l'autre pendant le bombage, les feuilles de verre sont de préférence maintenues à distance en disposant entre elles une poudre intercalaire assurant un espace de quelques dizaines de micromètres, typiquement de 20 à 50 µm. La poudre intercalaire est par exemple à base de carbonate de calcium et/ou de magnésium. Lors du bombage, la feuille de verre intérieure (destinée à être positionnée à l'intérieur de l'habitacle) est normalement placée au-dessus de la feuille de verre extérieure.

En particulier dans le cas du deuxième mode de réalisation décrit ci-avant (dépôt des revêtements sur des feuilles de verre de grande taille), l'étape de bombage est de préférence précédée d'une étape de découpe. Cette étape permet d'obtenir des feuilles de verre ayant les dimensions adéquates pour la réalisation du vitrage feuilleté.

L'étape de découpe peut être réalisée au bord de la première zone, revêtue de la couche de peinture, voire dans la première zone. L'étape de découpe est de préférence suivie d'une étape de façonnage.

L'étape de feuilletage peut être réalisée par un traitement en autoclave, par exemple à des températures de 110 à 160°C et sous une pression allant de 10 à 15 bars. Préalablement au traitement en autoclave, l'air emprisonné entre les feuilles de verre et l'intercalaire de feuilletage peut être éliminé par calandrage ou par dépression.

La feuille supplémentaire est de préférence la feuille intérieure du vitrage feuilleté, c'est-à-dire la feuille située du côté concave du vitrage, destinée à être positionnée à l'intérieur de l'habitacle du véhicule. De la sorte, les revêtements sont disposés en face 2 du vitrage feuilleté.

La feuille de verre supplémentaire peut être en verre silico-sodo-calcique, ou encore en verre de borosilicate ou d'aluminosilicate. Elle peut être en verre clair ou teinté. Son épaisseur est de préférence comprise entre 0,5 et 4 mm, notamment entre 1 et 3 mm.

Selon un mode de réalisation préféré, la feuille de verre supplémentaire est en verre d'aluminosilicate de sodium, de préférence renforcé chimiquement, et présente une épaisseur comprise entre 0,5 et 1,2 mm. La feuille de verre supplémentaire est de préférence la feuille intérieure du vitrage feuilleté. L'invention est particulièrement utile pour ce type de configuration, pour lequel il est difficile de disposer l'empilement de couches minces en face 3. Le renforcement chimique (aussi appelé « échange ionique ») consiste à mettre en contact la surface du verre avec un sel de potassium fondu (par exemple du nitrate de potassium), de manière à renforcer la surface du verre en échangeant des ions du verre (ici des ions sodium) par des ions de plus grand rayon ionique (ici des ions potassium). Cet échange ionique permet de former des contraintes de compression à la surface du verre et sur une certaine épaisseur. De préférence, la contrainte de surface est d'au moins 300 MPa, notamment 400 et même 500 MPa, et d'au plus 700 MPa, et l'épaisseur de la zone en compression est d'au moins 20 µm, typiquement entre 20 et 50 µm. Le profil de contraintes peut être déterminé de manière connue à l'aide d'un microscope polarisant équipé d'un compensateur de Babinet. L'étape de trempe chimique est de préférence mise en œuvre à une température allant de 380 à 550°C, et pour une durée allant de 30 minutes à 3 heures. Le renforcement chimique est de préférence réalisé après l'étape de bombage mais avant l'étape de feuilletage. Le vitrage obtenu est de préférence un pare-brise de véhicule automobile, en particulier un pare-brise chauffant.

Selon un autre mode de réalisation préféré, la feuille de verre supplémentaire porte sur la face opposée à la face tournée vers l'intercalaire de feuilletage (de préférence la face 4, la feuille supplémentaire étant la feuille intérieure) un empilement de couches minces supplémentaire, notamment un empilement à faible émissivité, comprenant un oxyde transparent conducteur, notamment l'oxyde d'indium et d'étain. L'invention est aussi particulièrement utile pour ce type de configuration, pour lequel il est délicat de disposer des empilements de couches minces sur les deux faces de la même feuille de verre (face 3 et 4). Dans ce mode de réalisation, l'intercalaire de feuilletage et/ou la feuille de verre supplémentaire est teinté(e), la feuille de verre portant la couche de peinture pouvant être en verre clair. Le vitrage obtenu est de préférence un toit de véhicule automobile.

L'intercalaire de feuilletage comprend de préférence au moins une feuille de polyvinylacétal, notamment de polyvinylbutyral (PVB).

L'intercalaire de feuilletage peut être teinté ou non-teinté afin si nécessaire de réguler les propriétés optiques ou thermiques du vitrage.

L'intercalaire de feuilletage peut avantageusement posséder des propriétés d'absorption acoustique afin d'absorber les sons d'origine aérienne ou solidienne. Il peut notamment être constitué à cet effet de trois feuilles polymériques, dont deux feuilles de PVB dites externes encadrant une feuille polymérique interne, éventuellement en PVB, de dureté plus faible que celle des feuilles externes.

L'intercalaire de feuilletage peut également posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent ou un revêtement alternant des couches diélectriques d'indices de réfractions différents, déposé sur une feuille de PET interne encadrée par deux feuilles de PVB externes.

L'épaisseur de l'intercalaire de feuilletage est généralement comprise dans un domaine allant de 0,3 à 1,5 mm, notamment de 0,5 à 1 mm. L'intercalaire de feuilletage peut présenter une épaisseur plus faible sur un bord du vitrage qu'au centre du vitrage afin d'éviter la formation d'une double image en cas d'utilisation d'un système de vision tête haute, dit HUD (head-up display).

Les exemples qui suivent illustrent l'invention de manière non-limitative.

Sur des feuilles de verre silico-sodocalcique clair de 2,1 mm d'épaisseur ont été déposés successivement une couche noire opaque (par sérigraphie, épaisseur humide : 20 à 25 pm) puis, après une étape de pré-cuisson pendant 3 minutes, un empilement de couches minces comprenant trois couches minces d'argent entourées de couches minces diélectriques (par pulvérisation cathodique magnétron). Après cuisson à différentes températures représentatives de températures utilisées pour le bombage du verre (entre 575 et 645°C, pendant 6 minutes), la résistance carrée de l'empilement de couches minces a été mesurée. Afin d'être le plus proche possible des conditions industrielles (cuisson simultanée avec le bombage du verre), la cuisson a été réalisée en disposant sur les feuilles de verre, du côté de la couche noire opaque, une deuxième feuille de verre clair de 2,1 mm d'épaisseur.

Dans un premier exemple comparatif A, la couche noire opaque était une couche d'émail obtenue par dépôt d'une composition d'émail comprenant des pigments ainsi qu'une fritte de verre au bismuth. La température de pré-cuisson était de 610°C.

Dans un exemple selon l'invention B, la couche noire opaque était une couche de peinture silicate obtenue à partir d'une composition commercialisée par la société ICD sous la référence CeramiGlass et décrite dans le brevet US 5,510,188. La température de pré-cuisson était de 610°C.

Dans un exemple selon l'invention C, la couche noire opaque était une couche de peinture silicate comme celle utilisée dans l'exemple B, mais la température de pré-cuisson était de 400°C.

Dans l'exemple de référence D, aucune couche noire n'a été déposée. L'empilement de couches minces a donc été déposé directement sur le verre.

Le tableau 1 ci-après récapitule les résistances carrées obtenues (en Ω) pour chaque exemple, avant cuisson et après cuisson à 575°C, 615°C et 645°C, dans la première zone.

**[Tableau 1]**

| | - | 575°C | 615°C | 645°C |
|---|---|---|---|---|
| A | 1,7 | 3,1 | 3,6 | 9 |
| B | 1,5 | 1,0 | 1,1 | 1,2 |
| C | 1,5 | 2,9 | 7,9 | 16,0 |
| D | 1,4 | 1,0 | 1,0 | 1,0 |

La comparaison des exemples A et D montre que l'existence d'une couche d'émail en contact avec l'empilement de couches minces est néfaste quant aux propriétés de conductivité de l'empilement après cuisson, puisque la résistance carrée augmente très fortement, et ce d'autant plus que la température de cuisson est élevée.

En revanche, l'utilisation d'une couche de peinture silicate (exemple B) permet de conserver une résistivité intéressante, du même niveau que celle obtenue en l'absence de couche noire (exemple D), à condition toutefois que la pré-cuisson ait été réalisée à température élevée (exemple C). Une pré-cuisson à basse température comme dans le cas de l'exemple C n'est toutefois pas préjudiciable lorsque les propriétés de conduction électrique dans la zone recouvrant la couche de peinture ne sont pas cruciales, par exemple lorsque l'empilement de couches minces est utilisé pour ses propriétés de réflexion du rayonnement infrarouge.

## Revendications

1. Matériau comprenant une feuille de verre dont une des faces comprend une première zone et une deuxième zone, la première zone seulement étant revêtue d'une couche de peinture minérale opaque obtenue à partir d'une composition de peinture aqueuse comprenant des pigments et une solution aqueuse de silicate alcalin, la couche de peinture minérale et la deuxième zone de la feuille de verre étant revêtues d'un empilement de couches minces comprenant au moins une couche mince électroconductrice.

2. Matériau selon la revendication 1, dans lequel au moins une couche mince électroconductrice est une couche métallique, notamment à base d'argent, ou une couche d'un oxyde transparent conducteur.

3. Matériau selon l'une des revendications précédentes, tel que la couche de peinture minérale opaque est noire, la clarté L* mesurée en réflexion côté verre étant de préférence inférieure à 5.

4. Matériau selon l'une des revendications précédentes, dans lequel la première zone représente entre 2 et 25%, notamment entre 3 et 20%, de la surface de la face revêtue.

5. Matériau selon l'une des revendications précédentes, tel que, dans la couche de peinture minérale, la teneur pondérale en silicate alcalin est comprise entre 7% et 60% et la teneur pondérale totale en pigments et charges minérales est comprise entre 20 et 90%.

6. Matériau selon l'une des revendications précédentes, tel que la couche de peinture minérale opaque a subi une étape de pré-cuisson à une température d'au moins 550°C avant le dépôt de l'empilement de couches minces.

7. Vitrage feuilleté, notamment pour pare-brise ou toit de véhicule automobile, comprenant un matériau selon l'une des revendications précédentes, lié adhésivement à une feuille de verre supplémentaire au moyen d'un intercalaire de feuilletage, de sorte que la couche de peinture minérale et l'empilement de couches minces soient tournés vers ledit intercalaire.

8. Vitrage feuilleté selon la revendication précédente, dans lequel la feuille de verre supplémentaire est en verre d'aluminosilicate de sodium, de préférence renforcé chimiquement, et présente une épaisseur comprise entre 0,5 et 1,2 mm.

9. Vitrage feuilleté selon la revendication 7, dans lequel la feuille de verre supplémentaire porte sur la face opposée à la face tournée vers l'intercalaire de feuilletage, un empilement de couches minces supplémentaire, notamment un empilement à faible émissivité comprenant un oxyde transparent conducteur.

10. Procédé d'obtention d'un matériau selon l'une des revendications 1 à 6, comprenant les étapes suivantes :
- la fourniture d'une feuille de verre dont une des faces comprend une première zone et une deuxième zone, puis
- une étape de dépôt sur la première zone d'une composition de peinture aqueuse comprenant des pigments et une solution aqueuse de silicate alcalin, puis
- une étape de pré-cuisson à une température d'au moins 200°C, de manière à obtenir une couche de peinture minérale, puis
- une étape de dépôt, sur la couche de peinture minérale et sur la deuxième zone de la feuille de verre, d'un empilement de couches minces comprenant au moins une couche mince électroconductrice.

11. Procédé selon la revendication précédente, dans lequel l'étape de pré-cuisson est réalisée à une température d'au moins 550°C.

12. Procédé selon l'une des revendications 10 ou 11, dans lequel l'étape de dépôt de la composition de peinture est réalisée par sérigraphie.

13. Procédé selon l'une des revendications 10 à 12, dans lequel l'étape de dépôt de l'empilement de couches minces est réalisée par pulvérisation cathodique.

14. Procédé d'obtention d'un vitrage feuilleté selon l'une des revendications 7 à 9, comprenant les étapes suivantes :
- la fourniture d'un matériau obtenu selon le procédé de l'une des revendications 10 à 13 et d'une feuille de verre supplémentaire, puis
- une étape de bombage, notamment simultané, du matériau et de la feuille de verre supplémentaire, puis
- une étape de feuilletage dudit matériau avec la feuille de verre supplémentaire au moyen d'un intercalaire de feuilletage, de sorte que la couche de peinture minérale et l'empilement de couches minces soient tournés vers ledit intercalaire.

15. Procédé selon la revendication précédente, dans lequel l'étape de bombage est précédée d'une étape de découpe du matériau.

## Patentansprüche

1. Material, umfassend eine Glasscheibe, von der eine der Seiten einen ersten Bereich und einen zweiten Bereich umfasst, wobei nur der erste Bereich mit einer opaken Mineralfarbschicht beschichtet ist, die aus einer wässrigen Farbzusammensetzung erhalten wurde, umfassend Pigmente und eine wässrige Alkalisilikatlösung, wobei die Mineralfarbschicht und der zweite Bereich der Glasscheibe mit einem Dünnschichtstapel beschichtet sind, umfassend mindestens eine elektrisch leitfähige Dünnschicht.

2. Material nach Anspruch 1, wobei mindestens eine elektrisch leitfähige Dünnschicht eine Metallschicht, insbesondere auf Silberbasis, oder eine Schicht aus einem transparenten leitfähigen Oxid ist.

3. Material nach einem der vorstehenden Ansprüche, wobei die opake Mineralfarbschicht schwarz ist, wobei die Klarheit L*, gemessen in glasseitiger Reflexion, vorzugsweise weniger als 5 beträgt.

4. Material nach einem der vorstehenden Ansprüche, wobei der erste Bereich zwischen 2 und 25 %, insbesondere zwischen 3 und 20 %, der Oberfläche der beschichteten Seite ausmacht.

5. Material nach einem der vorstehenden Ansprüche, wobei in der Mineralfarbschicht der Gehalt an Alkalisilikat zwischen 7 Gew.-% und 60 Gew.-% und der Gesamtgehalt an Mineralpigmenten und -füllstoffen zwischen 20 Gew.-% und 90 Gew.-% liegt.

6. Material nach einem der vorstehenden Ansprüche, wobei die opake Mineralfarbschicht vor dem Aufbringen des Dünnschichtstapels einen Vorhärtungsschritt bei einer Temperatur von mindestens 550 °C durchlaufen hat.

7. Verbundverglasung, insbesondere für eine Windschutzscheibe oder ein Dach eines Kraftfahrzeugs, umfassend ein Material nach einem der vorstehenden Ansprüche, das mit einer zusätzlichen Glasscheibe mittels einer Verbundzwischenlage klebend verbunden ist, sodass die Mineralfarbschicht und der Dünnschichtstapel der Zwischenlage zugewandt sind.

8. Verbundverglasung nach dem vorstehenden Anspruch, wobei die zusätzliche Glasscheibe aus Natriumaluminosilikatglas, vorzugsweise chemisch verstärkt, besteht und eine Dicke zwischen 0,5 und 1,2 mm aufweist.

9. Verbundverglasung nach Anspruch 7, wobei die zusätzliche Glasscheibe auf der Seite, die der der Verbundzwischenlage zugewandten Seite gegenüberliegt, einen zusätzlichen Dünnschichtstapel, insbesondere einen Stapel mit niedrigem Emissionsgrad, umfassend ein transparentes leitfähiges Oxid, trägt.

10. Verfahren zum Erhalten eines Materials nach einem der Ansprüche 1 bis 6, umfassend die folgenden Schritte:
- Bereitstellen einer Glasscheibe, von der eine der Seiten einen ersten Bereich und einen zweiten Bereich umfasst, dann
- einen Schritt des Aufbringens einer wässrigen Farbzusammensetzung, umfassend Pigmente und eine wässrige Alkalisilikatlösung, auf den ersten Bereich, dann
- einen Vorhärtungsschritt bei einer Temperatur von mindestens 200 °C, um eine Mineralfarbschicht zu erhalten, dann
- einen Schritt des Aufbringens eines Dünnschichtstapels, umfassend mindestens eine elektrisch leitfähige Dünnschicht, auf die Mineralfarbschicht und auf den zweiten Bereich der Glasscheibe.

11. Verfahren nach dem vorstehenden Anspruch, wobei der Vorhärtungsschritt bei einer Temperatur von mindestens 550 °C durchgeführt wird.

12. Verfahren nach einem der Ansprüche 10 oder 11, wobei der Schritt des Aufbringens der Farbzusammensetzung durch Siebdruck durchgeführt wird.

13. Verfahren nach einem der Ansprüche 10 bis 12, wobei der Schritt des Aufbringens des Dünnschichtstapels durch Kathodenzerstäubung durchgeführt wird.

14. Verfahren zum Erhalten einer Verbundverglasung nach einem der Ansprüche 7 bis 9, umfassend die folgenden Schritte:
- Bereitstellen eines Materials, das gemäß dem Verfahren nach einem der Ansprüche 10 bis 13 erhalten wurde, und einer zusätzlichen Glasscheibe, dann
- einen Schritt des Biegens, insbesondere gleichzeitig, des Materials und der zusätzlichen Glasscheibe, dann
- einen Schritt eines Laminierens des Materials mit der zusätzlichen Glasscheibe mittels einer Verbundzwischenlage, sodass die Mineralfarbschicht und der Dünnschichtstapel der Zwischenlage zugewandt sind.

15. Verfahren nach dem vorstehenden Anspruch, wobei dem Biegeschritt ein Schritt des Schneidens des Materials vorausgeht.

## Claims

1. A material comprising a glass sheet, one of the faces of which comprises a first zone and a second zone, only the first zone being coated with a layer of opaque mineral paint obtained from a water-based paint composition comprising pigments and an aqueous solution of alkaline silicate, the layer of mineral paint and the second zone of the glass sheet being coated with a thin layer stack comprising at least one electrically conductive thin layer.

2. The material as claimed in claim 1, in which at least one electrically conductive thin layer is a metallic layer, notably based on silver, or a layer of a conductive transparent oxide.

3. The material as claimed in either of the preceding claims, such that the layer of opaque mineral paint is black, the lightness L* measured in reflection on the glass side preferably being less than 5.

4. The material as claimed in one of the preceding claims, in which the first zone represents between 2% and 25%, notably between 3% and 20%, of the area of the coated face.

5. The material as claimed in one of the preceding claims, such that, in the layer of mineral paint, the weight content of alkaline silicate is between 7% and 60% and the total weight content of pigments and mineral fillers is between 20% and 90%.

6. The material as claimed in one of the preceding claims, such that the layer of opaque mineral paint has undergone a step of prefiring at a temperature of at least 550°C before the deposition of the thin layer stack.

7. A laminated glazing, notably for a motor vehicle windshield or sunroof, comprising a material as claimed in one of the preceding claims, adhesively bonded to an additional glass sheet by means of a lamination interlayer, so that the layer of mineral paint and the thin layer stack are turned toward said interlayer.

8. The laminated glazing as claimed in the preceding claim, in which the additional glass sheet is made of sodium aluminosilicate glass, which is preferably chemically reinforced, and has a thickness of between 0.5 and 1.2 mm.

9. The laminated glazing as claimed in claim 7, in which the additional glass sheet bears, on the face opposite the face turned toward the lamination interlayer, an additional thin layer stack, notably a low-emissivity stack comprising a conductive transparent oxide.

10. A process for obtaining a material as claimed in one of claims 1 to 6, comprising the following steps:
- providing a glass sheet, one of the faces of which comprises a first zone and a second zone, and then
- a step of depositing onto the first zone a water-based paint composition comprising pigments and an aqueous solution of alkaline silicate, and then
- a step of prefiring at a temperature of at least 200°C, so as to obtain a layer of mineral paint, and then
- a step of depositing, onto the layer of mineral paint and onto the second zone of the glass sheet, a thin layer stack comprising at least one electrically conductive thin layer.

11. The process as claimed in the preceding claim, in which the prefiring step is performed at a temperature of at least 550°C.

12. The process as claimed in either of claims 10 and 11, in which the step of depositing the paint composition is performed by screen printing.

13. The process as claimed in one of claims 10 to 12, in which the step of depositing the thin layer stack is performed by cathode sputtering.

14. A process for obtaining a laminated glazing as claimed in one of claims 7 to 9, comprising the following steps:
- providing a material obtained according to the process of one of claims 10 to 13 and an additional glass sheet, and then
- a step of bending, notably simultaneous, of the material and of the additional glass sheet, and then
- a step of laminating said material with the additional glass sheet by means of a lamination interlayer, so that the layer of mineral paint and the thin layer stack are turned toward said interlayer.

15. The process as claimed in the preceding claim, in which the bending step is preceded by a step of cutting the material.
